# EUROPÄISCHE PATENTSCHRIFT

(11) **EP 1 440 831 B1**
(45) Veröffentlichungstag und Bekanntmachung des Hinweises auf die Patenterteilung: **15.04.2009**
(21) Anmeldenummer: 04000792.4
(22) Anmeldetag: 16.01.2004
(51) Int. Cl.: B60J 10/00, B23P 19/04, B25B 27/00, F16B 5/12

(54) **Montagevorrichtung für Profile**
Mounting device for profiles
Dispositif de montage pour profilés

(30) Priorität: 24.01.2003 DE 10302958
(43) Veröffentlichungstag der Anmeldung: 28.07.2004
(73) Patentinhaber: Grunwald, Siegfried-W., 29359 Habighorst (DE)
(72) Erfinder: Grunwald, Siegfried-W., 29359 Habighorst (DE)
(74) Vertreter: Scheffler, Jörg

(56) Entgegenhaltungen:
- EP-A- 0 431 827
- EP-A- 0 497 048
- EP-A- 0 631 852
- EP-A- 0 845 332
- EP-A- 0 865 952
- DE-A1- 19 855 590
- GB-A- 2 327 698
- US-A- 4 996 756
- US-A- 5 169 081
- US-A- 5 940 950
- US-B1- 6 311 378

## Beschreibung

Die Erfindung betrifft eine Montagevorrichtung für Profile, insbesondere Dichtungsprofile, mit zwei drehbeweglichen Rollen, von denen eine mittels einer Antriebswelle antreibbar ist, welche das Profil zur Übertragung einer Verformungskraft beidseitig einschließen und die relativ zueinander beweglich sind.

Eine Montagevorrichtung der genannten Art wird in der Praxis beispielsweise in der Kraftfahrzeugindustrie eingesetzt. Zur Abdichtung von Karosserieausschnitten werden auf die Blechkanten insbesondere metallverstärkte Dichtungsprofile mit der entsprechend ausgestalteten Nut zunächst weitgehend kraft- und spannungsfrei aufgesetzt. Zur dauerhaften Fixierung des Dichtungsprofils an dem Randabschnitt des Blechbauteils ist es erforderlich, durch Aufbringen einer entsprechenden Verformungskraft eine kraftschlüssige Fixierung herbeizuführen, indem die Schenkel des Profils zusammengepresst werden und dabei die Blechkante einschließen.

Bei einem einfachen in der Praxis, insbesondere bei der Herstellung von Einzelanfertigungen oder Kleinserien von Kraftfahrzeugen, oftmals noch gebräuchlichem Verfahren werden die Schenkel des Profils mit einem Schlagkörper manuell verformt, wodurch sich jedoch lediglich sehr ungleichmäßige Fixierkräfte realisieren lassen. Mit dem derart fixierten Profil kann die gewünschte Abdichtung nur mit Einschränkungen realisiert werden. Zudem können sich derart fixierte Profile während des Betriebs des Kraftfahrzeuges lösen.

Zumeist werden jedoch in der Praxis, insbesondere bei der Großserienfertigung, Montagevorrichtungen eingesetzt, bei denen zwei parallele, gegenläufig angetriebene Rollen außenseitig gegen die Schenkel des Profils angelegt werden und während der Vorschubbewegung zwischen den Rollen die gewünschte Verformung des Profils bewirken.

Das Dokument EP 0 865 952 A1 offenbart eine Montagevorrichtung für Profile, insbesondere Dichtungsprofile, mit zwei drehbeweglichen Rollen, die mittels einer Antriebswelle antreibbar sind, welche das Profil zur Übertragung einer Verformungskraft beidseitig einschließen und die relativ zueinander beweglich sind, wobei die Montagevorrichtung ein Gehäuse aufweist, wobei zur Einstellung des Achsabstandes der Rollen relativ zueinander eine Feder vorgesehen ist, der Zwischen dem Gehäuse und einem einer der Rollen tragenden kleinen Lagerblock wirkt.

In der Erfindung weist die Montagevorrichtung ein mit zwei jeweils eine Rolle tragenden Gehäusehälften ausgestaltetes Gehäuse auf. Die Gehäusehälften sind zur Einstellung des Achsabstandes der Rollen relativ Zueinander mittels eines die Gehäusehälften verbindenden Stellgliedes um die Antriebswelle schwenkbeweglich angeordnet.

Das Dokument DE 4 035 366 A1 offenbart eine Montagevorrichtung für Profile, insbesondere Dichtungsprofile, mit zwei drehbeweglichen Rollen die mittels einer Antriebswelle antreibbar sind, welche das Profil zur Übertragung einer Verformungskraft beidseitig einschließen und die relativ zueinander beweglich sind.

Eine gattungsgemäße Montagevorrichtung offenbart beispielsweise die DE 41 26 273 A1. Die darin beschriebene Montagevorrichtung hat einen die zweite Rolle und eine weitere, senkrecht zu den anderen Rollen angeordnete Rolle tragenden Führungsschlitten, der mittels eines pneumatischen Antriebes in Richtung der ersten Rolle bewegbar ist um das Profil zur Übertragung einer Verformungskraft beidseitig einzuschließen. Der Führungsschlitten ist mittels einer Rückholfeder wieder in seine Ausgangslage überführbar. Aufgrund der Anordnung der zweiten und dritten Rolle an dem verstellbaren Führungsschlitten ist ein drehbeweglicher Antrieb dieser Rollen jedoch nicht möglich.

Eine weitere Montagevorrichtung ist auch durch die DE 198 55 590 A1 bekannt, die zusätzlich zu den parallelen Rollen mit zumindest einer weiteren Stützrolle ausgestattet ist, durch die eine Beschädigung bei der Verformung des Dichtungsprofiles vermieden wird. In ähnlicher Weise dient ein durch die DE 698 03 990 T2 offenbartes Führungsglied einer Montagevorrichtung dazu, auf einen seitlichen Fortsatz des Dichtungsprofiles eine Ablenkkraft zu übertragen.

Weiterhin ist durch die DE 690 09 155 T2 eine Vorrichtung zum Einfügen von flexiblen Streifen bekannt, die zusätzlich mit einem Sensor ausgestattet ist, welcher ein Signal bei einem unzulässig hohen Druck auslöst.

Die DE 40 34 212 A1 zeigt auch bereits eine Vorrichtung zum Befestigen einer U-förmigen Profilleiste auf einem Flansch bei der ein die Rollen aufweisendes Arbeitsteil bezüglich eines Trägers bewegbar ist, um so den Befestigungsvorgang zu vereinfachen.

Ein transportables Werkzeug zum Anbringen eines kanalförmigen Dicht- oder Abdeckstreifens ist Gegenstand der DE 39 03 809 C2. Das Werkzeug ist mit einer dritten Rolle ausgestattet, die senkrecht zu den anderen Rollen angeordnet ist und sich über den Spalt zwischen dem Rollenpaar erstreckt und auf den Steg des Kanals drückt.

Ferner zeigen auch die DE 69 400 735 T2, die DE 697 10 563 T2 sowie die JP 10 166208 A Montagevorrichtung für Profile.

Als nachteilig hat es sich in der Praxis bei allen bekannten Vorrichtungen herausgestellt, dass die Fixierung des Profils wesentlich durch die Materialstärke des Karosserieausschnittes und die individuelle Handhabung der Montagevorrichtung durch das Bedienpersonal bestimmt ist. Daher kommt es beispielsweise im Überlappungsbereich des Bleches zu erheblich abweichenden Kraftübertragungen. Dies führt in der Praxis zu Kraftspitzen, mechanischen Überlastungen sowie zu möglichen Beschädigungen der Montagevorrichtung. Weiterhin ergeben sich dadurch unterschiedliche Fixierkräfte des Profils. Zudem kommt es oftmals zu Beschädigungen im Ein- und Ausfahrbereich des Profils. Ferner erweist es sich hinderlich, dass jedes Profil spezielle, auf dessen Formgebung abgestimmte Rollen erfordert, um die gewünschte Verformungskraft sicherstellen zu können.

Man könnte daran denken, die Rollen elastisch verformbar auszuführen, um so insbesondere im Überlappungsbereich eine Nachgiebigkeit zu erreichen und eine unzulässige Kraftübertragung auf das Profil zu vermeiden. Dieser Gedanke ist jedoch in der Praxis undurchführbar, weil die Nachgiebigkeit eine Übertragung definierter Verformungskräfte ausschließt.

Der Erfindung liegt die Aufgabe zugrunde, eine Montagevorrichtung für Profile derart zu verbessern, dass dadurch die Fixierung des Profils wesentlich verbessert ist. Insbesondere soll dabei zugleich eine Anpassung an unterschiedliche Profile mit geringem Aufwand möglich sein.

Diese Aufgabe wird erfindungsgemäß mit einer Montagevorrichtung gemäß den Merkmalen des Anspruchs 1 gelöst. Die Unteransprüche betreffen besonders zweckmäßige Weiterbildungen der Erfindung.

Erfindungsgemäß weist also die Montagevorrichtung ein mit zwei, jeweils eine Rolle tragenden, Gehäusehälften ausgestattetes Gehäuse auf, wobei die Gehäusehälften zur Einstellung des Achsabstandes der Rollen relativ zueinander mittels eines die Gehäusehälften verbindenden Stellgliedes insbesondere um die Antriebswelle schwenkbeweglich angeordnet und wobei die zwei Rollen mittels der Antriebswelle drehbeweglich antreibbar sind. Hierdurch wird es erstmals möglich, beide Rollen mittels der Antriebswelle drehbeweglich anzutreiben und den Achsabstand der Rollen variabel einzustellen, um so mit geringem Aufwand eine Anpassung an unterschiedliche Profile oder Einbauumstände zu realisieren. Die Fixierung des Profils ist dadurch weitgehend unabhängig von dem individuellen Geschick des Bedienpersonals, weil die übertragbare Verformungskraft durch die Montagevorrichtung bestimmt ist. Die Gehäusehälften werden dabei zur Anpassung an das Profil gegeneinander verschwenkt, um den Achsabstand in gewünschter Weise zu verändern. Da die Schwenkachse mit der Antriebswelle übereinstimmt, beeinflusst der abweichende Achsabstand nicht die Übertragung der Antriebsleistung für die Rollen so dass die Schwenkbewegung während des Betriebes durchgeführt werden kann.

Eine besonders vorteilhafte Ausführungsform der vorliegenden Erfindung wird auch dann erreicht, wenn das Stellglied zur Übertragung einer einstellbaren, konstanten Verformungskraft zwischen den Gehäusehälften ausgeführt ist. Hierdurch wird die auf das Profil übertragbare Verformungskraft begrenzt und dadurch eine Beschädigung des Profils, insbesondere im Bereich der Ein- und Ausfahrzone vermieden. Die Verformungskraft ist dadurch weitgehend unabhängig von der Querschnittsform des Profils sowie der Materialstärke des Karosserieausschnittes. Die mittels des Stellgliedes übertragbare Haltekraft ist hierzu unabhängig von dem Stellweg und gestattet daher eine konstante Stellkraft.

Hierzu hat sich in der Praxis eine Abwandlung als besonders erfolgversprechend erwiesen, bei der das Stellglied einen Pneumatikzylinder, insbesondere Kurzhubzylinder aufweist oder mittels Federkraft, beispielsweise einer Spiraldruck- oder Zugfeder oder eines Tellerfederpaketes die Verformungskraft aufbringt. Hierdurch kann die gewünschte Stellkraft mit geringem Aufwand bei einer insgesamt sehr geringen Baugröße zuverlässig realisiert werden. Die Handhabung wird dadurch insbesondere in schwierig zugänglichen Bereichen des Karosserieausschnittes verbessert.

Dabei erweist es sich als besonders erfolgversprechend, wenn der Achsabstand der Rollen mittels des Stellgliedes stufenlos einstellbar ist, um so eine Anpassung an nahezu beliebige Profile und Materialstärken zu ermöglichen.

Nach einer weiteren zweckmäßigen Abwandlung ist dabei die mittels des Stellgliedes übertragbare Verformungskraft stufenlos einstellbar, um so die Fixierkräfte und damit die Belastbarkeit des Profils im Gebrauch an die jeweiligen Erfordernisse anpassen zu können. Beispielsweise können so auch unterschiedliche Fixierkräfte in verschiedenen Abschnitten des Profils vorgesehen werden.

Die Übertragung der Antriebsenergie auf die Rollen könnte mittels eines Zahnriemens oder einer Kette realisiert werden. Eine andere besonders vorteilhafte Ausgestaltung der vorliegenden Erfindung wird hingegen dann erreicht, wenn die Montagevorrichtung zur Übertragung der Rotationsenergie von der Antriebswelle auf die Rollen mit einem Zahnradgetriebe ausgestattet ist, wobei die Anzahl Zahnräder der beiden Gehäusehälften voneinander abweicht. Hierdurch wird eine zuverlässige Kraftübertragung bei zugleich sehr geringer Baugröße erreicht, wobei zugleich die übertragbaren Kräfte vergleichsweise groß sind. Durch die abweichende Zahl der Zahnräder wird eine gegenläufige Drehrichtung der Rollen erreicht, zwischen denen das Profil verformt wird. Die Vorschubbewegung ist dadurch von dem Bediener mit geringer Betätigungskraft aufzubringen. Beispielsweise wird eine linkslaufoptimierte zyklo-palloid-Verzahnung, insbesondere Kegel- bzw. Winkelverzahnung eingesetzt.

Dabei erweist es sich als besonders vorteilhaft, wenn die Montagevorrichtung eine Steuereinheit aufweist, mittels der in einer Ruhestellung der Rollen ein gegenüber einer Betriebsstellung vergrößerter Achsabstand einstellbar ist. Hierdurch kann das Ein- und Ausfahren der Montagevorrichtung erleichtert werden, indem der weite Achsabstand der Rollen ein müheloses und kraftfreies Aufsetzen der Montagevorrichtung auf das Profil gestattet. Eine Beschädigung des Profils wird dadurch vermieden.

Die Rollenachsen könnten zueinander oder gegenüber der Antriebswelle geneigt angeordnet sein. Besonders vorteilhaft erweist sich jedoch eine Abwandlung der erfindungsgemäßen Montagevorrichtung, bei welcher die Rollenachsen parallel zu der Antriebswelle angeordnet sind. Hierdurch wird eine optimale Krafteinleitung in die Rollen sowie von den Rollen auf das Profil erreicht. Ein unerwünschtes Verkanten, welches zu Spannungsspitzen führen kann, oder ein Abgleiten von dem Profil, kann dadurch verhindert werden.

Die Gehäusehälften könnten scherenförmig ausgeführt und um eine zentral angeordnete Antriebswelle schwenkbar angeordnet sein. Besonders praxisnah ist hingegen eine Weiterbildung, bei der die Rollen an der jeweiligen Gehäusehälfte zwischen der Schwenkachse und dem Stellglied angeordnet sind. Die Rollenachse sowie die Antriebswelle sind dabei auf derselben Seite der durch die Gehäusehälfte gebildeten und durch die Antriebswelle miteinander verbundenen Hebelarmes angeordnet, wodurch sich eine kompakte und einfache zu handhabende Bauform des Gehäuses realisieren lässt.

Eine weitere praxisnahe Ausführungsform wird auch dadurch erreicht, dass die Rollen entsprechend der Formgebung des Profils voneinander abweichende Querschnittsformen aufweisen. Hierdurch wird eine an das jeweilige Profil optimal angepasste Verformung und damit eine wesentlich verbesserte Fixierung erreicht. Zugleich werden dabei Beschädigungen des Profils ausgeschlossen.

Dabei hat es sich in der Praxis als besonders erfolgversprechend erwiesen, wenn die Montagevorrichtung eine Vielzahn- oder Torxverbindung zur Übertragung der Antriebsenergie auf die Rollen aufweist. Hierdurch können auch hohe Drehmomente ohne nachteilige Einflüsse bei den Rundlaufeigenschaften von der Antriebswelle auf die Rollen übertragen werden. Die Verformungskraft wird dadurch gleichmäßig auf das Profil übertragen und damit eine kontinuierliche Fixierkraft sichergestellt.

Eine andere besonders erfolgversprechende Abwandlung der vorliegenden Erfindung wird auch dadurch realisiert, dass die Montagevorrichtung eine zu den Rollen quer angeordnete Druckrolle aufweist, die gegen einen Profilrücken anlegbar ist. Hierdurch wird der Profilrücken gegen die Stirnseite des Karosserieausschnittes mittels der Druckrolle angepresst und dadurch zuverlässig in die vorbestimmte Position gebracht. Eine fehlerhafte Positionierung wird dadurch ausgeschlossen. Zugleich wird die von dem Bedienpersonal aufzubringende Vorschubbewegung dabei erleichtert.

Dabei erweist es sich auch als zweckmäßig, wenn die Druckrolle pendelbeweglich angeordnet ist, um so eine Anpassung an die Laufeigenschaften des Profils zu erreichen. Weiterhin werden dadurch auch die Führungseigenschaften der Montagevorrichtung im Bereich enger Kurvenradien wesentlich optimiert.

Bei einer Ausführungsform der erfindungsgemäßen Montagevorrichtung, bei der die Druckrolle ballig oder tonnenförmig ausgeführt ist, werden insbesondere schlauchförmige Profile geschont und zudem Rattermarken am Profil vermieden. Beispielsweise weist die ballige Formgebung einen Radius auf, der geringer als 3 cm ist.

Eine weitere ebenfalls besonders erfolgversprechende Weiterbildung der vorliegenden Erfindung wird dann erreicht, wenn die Montagevorrichtung zusätzlich zumindest eine in Vorschubrichtung vor den Rollen angeordnete Führungsrolle zur Vorverformung des Profils unmittelbar vor der Einleitung der Verformungskraft aufweist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Ansicht einer erfindungsgemäßen Montagevorrichtung;
- Fig. 2: eine perspektivische Darstellung eines geöffneten Gehäuses der in Figur 1 gezeigten Montagevorrichtung;
- Fig. 3: eine Darstellung die in Figur 1 gezeigten Montagevorrichtung von unten.

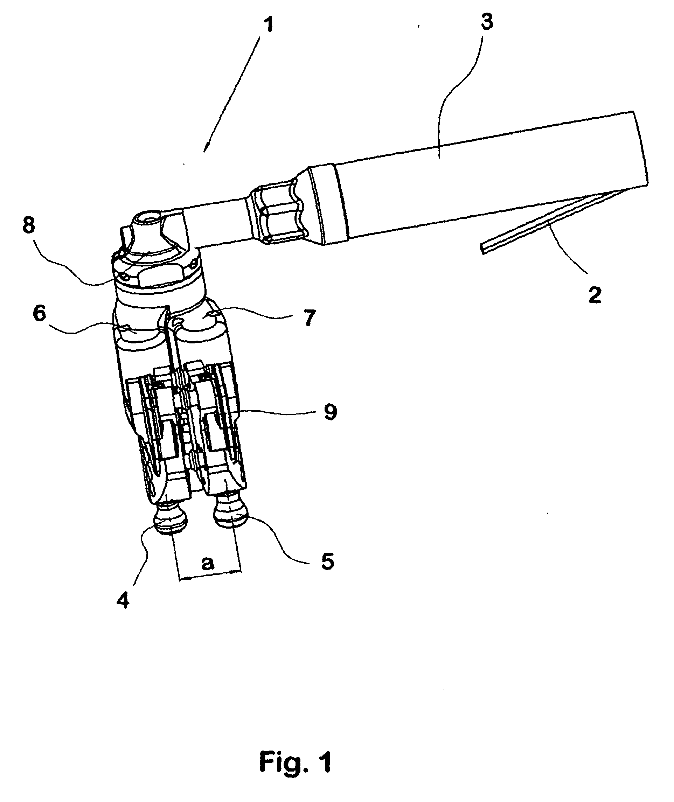

Figur 1 zeigt eine erfindungsgemäße Montagevorrichtung 1 für ein nicht dargestelltes Profil in einer perspektivischen Ansicht. Die Montagevorrichtung 1 hat einen mittels eines Handhebels 2 betätigbaren, insbesondere pneumatischen Antrieb 3, dessen Antriebsleistung auf zwei parallele Rollen 4, 5 übertragbar ist. Mit den Rollen 4, 5 ist die Montagevorrichtung 1 gegen das nicht gezeigte Profil außenseitig anlegbar und ermöglicht dadurch eine Verformung zur Fixierung des Profils beispielsweise auf einer Blechkante. Die Rollen 4, 5 sind jeweils an einer Gehäusehälfte 6, 7 eines Gehäuses 8 der Montagevorrichtung 1 angeordnet, wobei die Gehäusehälften 6, 7 relativ zueinander verschwenkbar sind. Durch die Schwenkbeweglichkeit der Gehäusehälften 6, 7 ist ein Achsabstand a der Rollen 4, 5 mittels eines als Kurzhubzylinder ausgeführten Stellgliedes 9 stufenlos einstellbar. Die mittels der Rollen 4, 5 auf das Profil übertragbaren Verformungskraft ist dabei unabhängig von dem Achsabstand a, so dass auch in Überlappungsbereichen des das Profil tragenden Bleches und der damit verbunden größeren Materialstärke keine unerwünscht hohe Verformungskraft auftreten kann. Vielmehr weist die Verformungskraft unabhängig von dem Geschick des Bedienpersonals einen konstanten, optimalen Wert auf, so dass die Haltbarkeit und die Fixierung des Profils gegenüber dem Stand der Technik wesentlich verbessert ist.

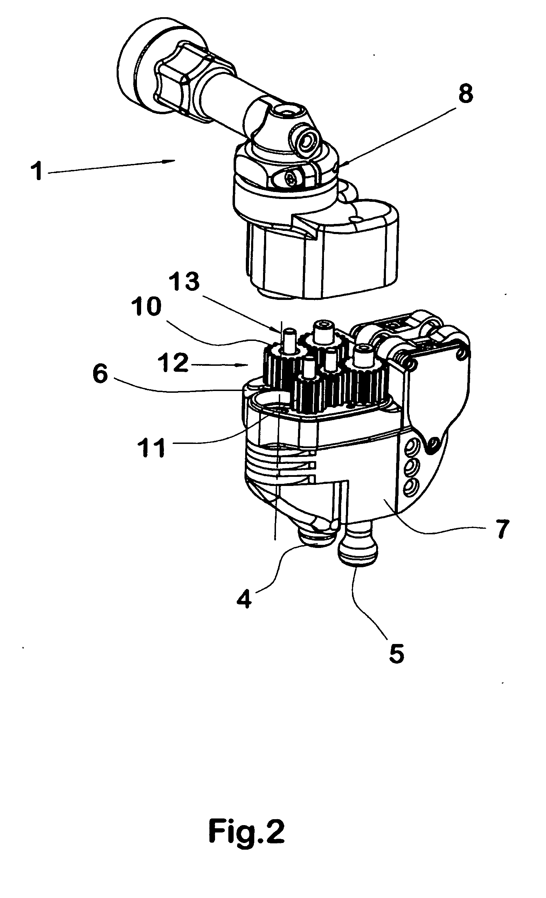

Figur 2 zeigt in einer perspektivischen Darstellung eine geöffnete Montagestellung des Gehäuses 8 der Montagevorrichtung 1. Zu erkennen ist ein aus mehreren Zahnrädern 10, 11 bestehendes Zahnradgetriebe 12, die in der geschlossenen Gebrauchsstellung des Gehäuses 8 in eine, in Richtung einer Achse 13 verlaufenden nicht dargestellten Antriebswelle eingreifen. Durch die abweichende Anzahl der Zahnräder 10, 11 der beiden Gehäusehälften 6, 7 wird die gewünschte gegensinnige Drehrichtung der beiden Rollen 4, 5 erreicht, die dadurch eine einfache Vorschubbewegung der Montagevorrichtung 1 ermöglichen.

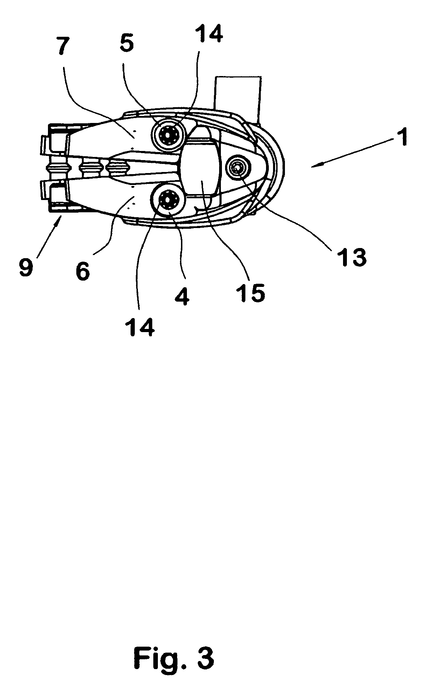

Figur 3 zeigte eine Darstellung der Montagevorrichtung 1 in einer Ansicht von unten. Zu erkennen sind die beiden Gehäusehälften 6, 7, die relativ zueinander um die gemeinsame Achse 13 zueinander verschwenkbar angeordnet sind. Mittels des Stellgliedes 9 wird dabei eine konstante Haltekraft eingestellt, um so unabhängig von dem Achsabstand a der Rollen 4, 5 eine konstante Verformungskraft auf das zwischen den Rollen 4, 5 hindurchzuführende Profil sicherzustellen. Die Verformungskraft ist dadurch unabhängig von der Profildicke und einem möglichen unbeabsichtigten Verkanten der Montagevorrichtung 1. Zur Übertragung der Antriebsleistung sind die Rollen 4, 5 mittels einer Torxverbindung 14 mit den jeweiligen in Figur 2 dargestellten Zahnrad 10, 11 verbunden. Die Montagevorrichtung 1 weist zusätzlich eine ballige Druckrolle 15 auf, die quer zu den Rollen 4, 5 angeordnet ist, und im Betrieb gegen einen Profilrücken des Profils anliegt, um dieses in der vorgesehenen Position zu halten bis die gewünschte Fixierung durch die Verformung der Profilflanken mittels der Rollen 4, 5 abgeschlossen ist.

## Patentansprüche

1. Montagevorrichtung (1) für Profile, insbesondere Dichtungsprofile, mit zwei drehbeweglichen Rollen (4, 5), die mittels einer Antriebswelle antreibbar sind, welche das Profil zur Übertragung einer Verformungskraft beidseitig einschließen und die relativ zueinander beweglich sind, **dadurch gekennzeichnet, dass** die Montagevorrichtung (1) ein mit zwei jeweils eine Rolle (4, 5) tragenden Gehäusehälften (6, 7) ausgestattetes Gehäuse (8) aufweist, wobei die Gehäusehälften (6, 7) zur Einstellung des Achsabstandes (a) der Rollen (4, 5) relativ zueinander mittels eines die Gehäusehälften (6, 7) verbindenden Stellgliedes (9) um die Antriebswelle (13) schwenkbeweglich angeordnet sind.

2. Montagevorrichtung (1) nach Anspruch 1, **dadurch gekennzeichnet, dass** das Stellglied (9) zur Übertragung einer einstellbaren, konstanten Verformungskraft ausgeführt ist.

3. Montagevorrichtung (1) nach den Ansprüchen 1 oder 2, **dadurch gekennzeichnet, dass** das Stellglied (9) einen Pneumatikzylinder, insbesondere Kurzhubzylinder, aufweist.

4. Montagevorrichtung (1) nach zumindest einem der vorhergehenden Ansprüche, **dadurch gekennzeichnet, dass** der Achsabstand (a) der Rollen (4, 5) mittels des Stellgliedes (9) stufenlos einstellbar ist.

5. Montagevorrichtung (1) nach zumindest einem der vorhergehenden Ansprüche, **dadurch gekennzeichnet, dass** eine mittels des Stellgliedes (9) übertragbare Verformungskraft stufenlos einstellbar ist.

6. Montagevorrichtung (1) nach zumindest einem der vorhergehenden Ansprüche, **dadurch gekennzeichnet, dass** die Montagevorrichtung (1) zur Übertragung der Rotationsenergie von der Antriebswelle auf die Rollen (4, 5) mit einem Zahnradgetriebe (12) ausgestattet ist, wobei die Anzahl Zahnräder (10, 11) der beiden Gehäusehälften (6, 7) voneinander abweicht.

7. Montagevorrichtung (1) nach zumindest einem der vorhergehenden Ansprüche, **dadurch gekennzeichnet, dass** die Montagevorrichtung (1) eine Steuereinheit aufweist, mittels der in einer Ruhestellung der Rollen (4, 5) ein gegenüber einer Betriebsstellung vergrößerter Achsabstand (a) einstellbar ist.

8. Montagevorrichtung (1) nach zumindest einem der vorhergehenden Ansprüche, **dadurch gekennzeichnet, dass** die Rollenachsen parallel zu der Antriebswelle angeordnet sind.

9. Montagevorrichtung (1) nach zumindest einem der vorhergehenden Ansprüche, **dadurch gekennzeichnet, dass** die Rollen an der jeweiligen Gehäusehälfte (6, 7) zwischen der Schwenkachse (Achse 13) und dem Stellglied (9) angeordnet sind.

10. Montagevorrichtung (1) nach zumindest einem der vorhergehenden Ansprüche, **dadurch gekennzeichnet, dass** die Rollen (4, 5) entsprechend der Formgebung des Profils voneinander abweichende Querschnittsformen aufweisen.

11. Montagevorrichtung (1) nach zumindest einem der vorhergehenden Ansprüche, **dadurch gekennzeichnet, dass** die Montagevorrichtung (1) eine Vielzahn- oder Torxverbindung zur Übertragung der Antriebsenergie auf die Rollen (4, 5) aufweist.

12. Montagevorrichtung (1) nach zumindest einem der vorhergehenden Ansprüche, **dadurch gekennzeichnet, dass** die Montagevorrichtung (1) eine zu den Rollen (4, 5) quer angeordnete Druckrolle (15) aufweist, die gegen einen Profilrücken anlegbar ist.

13. Montagevorrichtung (1) nach Anspruch 12, **dadurch gekennzeichnet, dass** die Druckrolle (15) pendelbeweglich angeordnet ist.

14. Montagevorrichtung (1) nach den Ansprüche 12 oder 13, **dadurch gekennzeichnet, dass** die Druckrolle (15) ballig oder tonnenförmig ausgeführt ist.

15. Montagevorrichtung (1) nach zumindest einem der vorhergehenden Ansprüche, **dadurch gekennzeichnet, dass** die Montagevorrichtung (1) zusätzlich zumindest eine in Vorschubrichtung vor den Rollen (4, 5) angeordnete Führungsrolle zur Vorverformung des Profils unmittelbar vor der Einleitung der Verformungskraft aufweist.

## Claims

1. Mounting device (1) for profiles, in particular sealing profiles, comprising two rotatable rollers (4, 5) which can be driven by means of a drive shaft, which enclose the profile on both sides in order to transmit a deformation force, and which are movable relative to one another, **characterized in that** the mounting device (1) comprises a housing (8) equipped with two housing halves (6, 7) carrying one roller (4, 5) each, wherein the housing halves (6, 7) are pivotably arranged about the drive shaft (13) in order to adjust the axial spacing (a) of the rollers (4, 5) relative to one another by means of an actuator (9) which connects the housing halves (6, 7).

2. Mounting device (1) according to Claim 1, **characterized in that** the actuator (9) is designed to transmit an adjustable, constant deformation force.

3. Mounting device (1) according to Claim 1 or 2, **characterized in that** the actuator (9) comprises a pneumatic cylinder, in particular a short-stroke cylinder.

4. Mounting device (1) according to at least one of the preceding claims, **characterized in that** the axial spacing (a) of the rollers (4, 5) is infinitely adjustable by means of the actuator (9).

5. Mounting device (1) according to at least one of the preceding claims, **characterized in that** a deformation force which can be transmitted by means of the actuator (9) is infinitely adjustable.

6. Mounting device (1) according to at least one of the preceding claims, **characterized in that** the mounting device (1) is equipped with a gearwheel mechanism (12) in order to transmit the rotational energy from the drive shaft to the rollers (4, 5), wherein the number of gearwheels (10, 11) of the two housing halves (6, 7) differs from one another.

7. Mounting device (1) according to at least one of the preceding claims, **characterized in that** the mounting device (1) comprises a control unit by means of which, with the rollers (4, 5) in a rest position, an increased axial spacing (a) in relation to an operating position can be set.

8. Mounting device (1) according to at least one of the preceding claims, **characterized in that** the roller axes are arranged parallel to the drive shaft.

9. Mounting device (1) according to at least one of the preceding claims, **characterized in that** the rollers on the respective housing half (6, 7) are arranged between the pivot axis (axis 13) and the actuator (9).

10. Mounting device (1) according to at least one of the preceding claims, **characterized in that** the rollers (4, 5) have cross-sectional shapes which differ from one another corresponding to the shaping of the profile.

11. Mounting device (1) according to at least one of the preceding claims, **characterized in that** the mounting device (1) has a multi-tooth or Torx connection to transmit the drive energy to the rollers (4, 5).

12. Mounting device (1) according to at least one of the preceding claims, **characterized in that** the mounting device (1) has a pressure roller (15) which is arranged transversely with respect to the rollers (4, 5) and which can be placed against the back of a profile.

13. Mounting device (1) according to Claim 12, **characterized in that** the pressure roller (15) is arranged such that it can move in pendulum fashion.

14. Mounting device (1) according to Claim 12 or 13, **characterized in that** the pressure roller (15) is spherical or barrel-shaped.

15. Mounting device (1) according to at least one of the preceding claims, **characterized in that** the mounting device (1) additionally comprises at least one guide roller which is arranged in front of the rollers (4, 5) as seen in the feed direction and which is intended to pre-deform the profile immediately prior to the application of the deformation force.

## Revendications

1. Dispositif de montage (1) pour profilés, notamment pour profilés d'étanchéification, avec deux rouleaux (4, 5) mobiles en rotation pouvant être entraînés à l'aide d'un arbre d'entraînement et englobant des deux côtés le profilé afin de transmettre une force de déformation et mobiles l'un par rapport à l'autre, **caractérisé en ce que** le dispositif de montage (1) comporte un boîtier (8) pourvu de deux moitiés de boîtier (6, 7) supportant respectivement un rouleau (4, 5), les moitiés de boîtier (6, 7) étant disposées de façon mobile en pivotement autour de l'arbre d'entraînement (13) pour régler l'écartement axial (a) des rouleaux (4, 5) l'un par rapport à l'autre à l'aide d'un élément de réglage (9) reliant les moitiés de boîtier (6, 7).

2. Dispositif de montage (1) selon la revendication 1, **caractérisé en ce que** l'élément de réglage (9) est réalisé de façon à transmettre une force de déformation constante réglable.

3. Dispositif de montage (1) selon les revendications 1 ou 2, **caractérisé en ce que** l'élément de réglage (9) comporte un vérin pneumatique, notamment un vérin à faible course.

4. Dispositif de montage (1) selon au moins l'une quelconque des revendications précédentes, **caractérisé en ce que** l'écartement axial (a) des rouleaux (4, 5) peut être réglé progressivement à l'aide de l'élément de réglage (9).

5. Dispositif de montage (1) selon au moins l'une quelconque des revendications précédentes, **caractérisé en ce qu'**une force de déformation transmissible à l'aide de l'élément de réglage (9) peut être réglée progressivement.

6. Dispositif de montage (1) selon au moins l'une quelconque des revendications précédentes, **caractérisé en ce que** le dispositif de montage (1) est équipé d'un engrenage à roues dentées (12) pour transmettre l'énergie de rotation de l'arbre d'entraînement aux rouleaux (4, 5), le nombre de roues dentées (10, 11) différant pour les deux moitiés de boîtier (6, 7).

7. Dispositif de montage (1) selon au moins l'une quelconque des revendications précédentes, **caractérisé en ce que** le dispositif de montage (1) comporte une unité de commande à l'aide de laquelle un écartement axial agrandi par rapport à une position de fonctionnement (a) peut être réglé dans une position de repos des rouleaux (4, 5).

8. Dispositif de montage (1) selon au moins l'une quelconque des revendications précédentes, **caractérisé en ce que** les axes de rouleaux sont disposés parallèlement à l'arbre d'entraînement.

9. Dispositif de montage (1) selon au moins l'une quelconque des revendications précédentes, **caractérisé en ce que** les rouleaux sont disposés entre l'axe de pivotement (axe 13) et l'élément de réglage (9) au niveau de la moitié de boîtier (6, 7) respective.

10. Dispositif de montage (1) selon au moins l'une quelconque des revendications précédentes, **caractérisé en ce que** les rouleaux (4, 5) comportent des formes de section transversale différant les unes des autres en fonction de la forme du profilé.

11. Dispositif de montage (1) selon au moins l'une quelconque des revendications précédentes, **caractérisé en ce que** le dispositif de montage (1) comporte une jonction à tête polygonale ou torx pour transmettre une énergie d'entraînement aux rouleaux (4, 5).

12. Dispositif de montage (1) selon au moins l'une quelconque des revendications précédentes, **caractérisé en ce que** le dispositif de montage (1) comporte un rouleau compresseur (15) disposé perpendiculairement aux rouleaux (4, 5) et pouvant être disposé contre la partie de dos du profilé.

13. Dispositif de montage (1) selon la revendication 12, **caractérisé en ce que** le rouleau compresseur (15) est disposé de façon à pouvoir effectuer un mouvement pendulaire.

14. Dispositif de montage (1) selon les revendications 12 ou 13, **caractérisé en ce que** le rouleau compresseur (15) prend une forme de balle ou de tonne.

15. Dispositif de montage (1) selon au moins l'une quelconque des revendications précédentes, **caractérisé en ce que** le dispositif de montage (1) comporte en outre au moins un rouleau de guidage disposé dans la direction d'avance des rouleaux (4, 5) pour déformer le profilé directement avant l'introduction de la force de déformation.
